(19) Europäisches Patentamt

European Patent Office

Office européen des brevets

(11) **EP 1 341 721 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(21) Anmeldenummer: **01270494.6**

(22) Anmeldetag: **21.11.2001**

(51) Int Cl.$^7$: **C01B 33/04**, C01B 33/18

(86) Internationale Anmeldenummer:
**PCT/EP2001/013506**

(87) Internationale Veröffentlichungsnummer:
**WO 2002/048035 (20.06.2002 Gazette 2002/25)**

(54) **VERFAHREN ZUR HERSTELLUNG VON SILAN**

METHOD FOR PRODUCING SILANE

PROCEDE DE PRODUCTION DE SILANE

(84) Benannte Vertragsstaaten:
**AT BE CH CY DE DK ES FI FR GB GR IE IT LI LU MC NL PT SE TR**

(30) Priorität: **11.12.2000 DE 10061680**

(43) Veröffentlichungstag der Anmeldung:
**10.09.2003 Patentblatt 2003/37**

(73) Patentinhaber: **SOLARWORLD AKTIENGESELLSCHAFT**
**53113 Bonn (DE)**

(72) Erfinder:
• **BLOCK, Hans-Dieter**
 **51381 Leverkusen (DE)**
• **MLECZKO, Leslaw**
 **44801 Bochum (DE)**
• **BULAN, Andreas**
 **40764 Langenfeld (DE)**
• **WEBER, Rainer**
 **51519 Odenthal (DE)**
• **BUCHHOLZ, Sigurd**
 **50825 Köln (DE)**
• **SILL, Torsten**
 **58332 Schwelm (DE)**

(74) Vertreter: **Rau, Albrecht**
 **Rau, Schneck & Hübner**
 **Königstrasse 2**
 **90402 Nürnberg (DE)**

(56) Entgegenhaltungen:
 **EP-A- 0 133 209     US-A- 4 340 574**
 **US-A- 4 676 967**

## Beschreibung

Die vorliegende Erfindung betrifft ein Verfahren zur Herstellung von Silan ($SiH_4$) durch Umsetzung von metallurgischem Silicium mit Siliciumtetrachlorid ($SiCl_4$), Wasserstoff ($H_2$) und Chlorwasserstoff (HCl), Entfernung von Verunreinigungen aus dem entstehenden trichlorsilanhaltigen ($SiHCl_3$) Rohgasstrom und Disproportionierung des $SiHCl_3$ zu $SiCl_4$ und Silan.

Silan kann zur Erzeugung von Reinstsilicium verwendet werden, das bei der Herstellung von Halbleitern und Solarzellen benötigt wird. Gemäß "Silicon for the Chemical Industry IV, Geiranger, Norway, June 3-5, 1998, Ed.: H.A. Øye, H.M. Rong, L. Nygaard, G. Schüssler, J.Kr. Tuset, S. 93 - 112" erfolgt die Erzeugung von Silan, das bei der Reinstsilicium-Herstellung eingesetzt wird nach zwei unterschiedlichen Verfahren:

Umsetzung von Siliciumtetrafluorid ($SiF_4$) mit Natriumaluminiumhydrid ($NaAlH_4$) zu $SiH_4$ und Natriumaluminiumfluorid ($NaAlF_4$), Reinigung des gebildeten $SiH_4$, Abscheidung von Reinstsilicium an Siliciumsaatpartikeln in einem Wirbelbett und Entfernung von $H_2$ aus den gebildeten Reinstsilicium-Granalien. Es fallen große Menge an $NaAlF_4$ an, die verwertet bzw. vermarktet werden müssen.

Umsetzung von metallurgischem Silicium mit $SiCl_4$ und $H_2$ in einem Wirbelbett zu $SiHCl_3$, katalysierte zweistufige Disproportionierung des $SiHCl_3$ in $SiCl_4$ und $SiH_4$, Rückführung des gebildeten $SiCl_4$ in die Umsetzung von metallurgischem Silicium mit $SiCl_4$ und $H_2$, thermische Zersetzung des gebildeten $SiH_4$ an Siliciumstäben zu Reinstsilicium und Rückführung des dabei gebildeten $H_2$ in die Umsetzung von metallurgischem Silicium mit $SiCl_4$ und $H_2$.

Das letztgenannte Verfahren zeichnet sich dadurch aus, dass ein Zwangsanfall von großen Mengen an Nebenprodukten durch Nutzung des anfallenden $SiCl_4$ bei der Herstellung von $SiHCl_3$ durch Umsetzung mit metallurgischem Silicium und Wasserstoff vermieden wird.

Ausführungsformen dieses Verfahrens sind in "Studies in Organic Chemistry 49, Catalyzed Direct Reaktions of Silicon, Elsevier, 1993, S.450 bis 457", DE 3 311 650 C2 und CA-A-1 162 028 dargelegt. Gemäß diesen Schriften erfolgt die Herstellung von Silan nach diesem Verfahren in folgenden Schritten:

1. Umsetzung von metallurgischem Silicium mit $SiCl_4$ und $H_2$ bei 400 bis 600°C und einem Druck von 20,7 bis 41,4 bar in einem Wirbelbettreaktor.

2. Entfernung von Verunreinigungen, wie nicht umgesetztes feinteiliges Silicium, Metallchloride, Polysilane, Siloxane und ggf. Katalysator, aus dem entstandenen chlorsilanhaltigen und wasserstoffhaltigen Reaktionsgemisch durch Wäsche des heißen Gasstroms mit kondensierten Chlorsilanen.

3. Entsorgung der dabei anfallenden feststoffhaltigen Chlorsilane-Suspension.

4. Kondensation des gereinigten Reaktionsgemisches.

5. Rückführung des in Schritt 4 anfallenden Wasserstoffs in Schritt 1.

6. Destillative Auftrennung des gereinigten Reaktionsgemisches in $SiCl_4$ und $SiHCl_3$.

7. Rückführung von $SiCl_4$ in Schritt 1.

8. 2-stufige katalysierte Disproportionierung von in Schritt 6 erhaltenem $SiHCl_3$ zu $SiH_4$ und $SiCl_4$.

9. Rückführung von $SiCl_4$ in Schritt 1.

10. Destillative Reinigung des in Schritt 8 erhaltenen $SiH_4$.

Ein Nachteil des dargestellten Verfahrens besteht darin, dass die Entfernung von Verunreinigungen aus dem heißen Gasstrom der Umsetzung im Wirbelbett durch Wäsche mit kondensierten Chlorsilanen (Schritt 2) wegen der Anwesenheit von feinteiligen festen Gasbestandteilen technisch sehr aufwendig ist. Zudem besteht die Gefahr, dass die eingesetzte Apparatur durch Feststoffe verstopft wird, was einen kontinuierlichen Betrieb erschwert.

Die Entsorgung der in Schritt 2 anfallenden silicummetall- und metallchloridhaltigen Chlorsilane-Suspension erfolgt gemäß DE 3 709 577 A1 durch eine spezielle destillative Auftrennung der Chlorsilane und der Feststoffe, wobei ein großer Teil der Chlorsilane wiedergewonnen werden kann und in den Kreislauf zurückgeführt wird. Der verbleibende feststoff- und chlorsilanehaltige Destillationssumpf kann nicht verwertet werden und muss deshalb einer Abfallentsorgung zugeführt werden, wie sie beispielsweise in US-A-4 690 810 beschrieben ist. Diese Vorgehensweise beeinträchtigt die Wirtschaftlichkeit des Verfahrens. Ein weiterer Nachteil besteht darin, dass mit den zurückgewonnen Chlorsilanen störende Verunreinigungen in den Prozess zur Herstellung von Silan zurückgeführt werden, was zu einer unerwünschten Anreicherung dieser Verunreinigungen und damit zu einer Prozessbeeinträchtigung fuhren kann.

Charakteristisch für dieses Verfahren ist also ein Rückführstrom an Siliciumtetrachlorid. Bei Zusammenfassung aller relevanten Gleichungen wird bei diesem Verfahren Silan aus Silicium und Wasserstoff erzeugt. Siliciumtetrachlorid wird innerhalb des Prozesses stets im Kreis geführt und verlässt diesen Kreislauf nicht.

$$(1) \quad Si + 2\,H_2 + 3\,SiCl_4 \quad \rightarrow \quad 4\,SiHCl_3$$

$$(2) \quad 4\,SiHCl_3 \quad \rightarrow \quad 3\,SiCl_4 + SiH_4$$

$$(3) \quad Si + 2\,H_2 \quad \rightarrow \quad SiH_4$$

Wegen der unvollständigen Umsetzung von Silicium, Wasserstoff und Siliciumtetrachlorid wäre die erste Gleichung genauer wie folgt zu formulieren:

$$(1a) \quad Si + (2+x)\,H_2 + (3+y)\,SiCl_4 \rightarrow 4\,SiHCl_3 + x\,H_2 + y\,SiCl_4$$

Dadurch wird zwar das Gesamtergebnis nach Gleichung (3) nicht verändert, es zeigt sich aber, dass das nicht umgesetzte Siliciumtetrachlorid dem Kreislaufstrom von Siliciumtetrachlorid vergrößert.

Die Aufgabe der vorliegenden Erfindung bestand nun darin, ein Verfahren zur Herstellung von Silan bereitzustellen, welches die genannten Nachteile nicht aufweist und eine kostengünstige Produktion von Silan gestattet.

Die vorliegende Erfindung betrifft ein Verfahren zur Herstellung von Silan ($SiH_4$) durch

a) Umsetzung von metallurgischem Silicium mit Siliciumtetrachlorid ($SiCl_4$) und Wasserstoff ($H_2$) zu einem trichlorsilan- ($SiHCl_3$) und siliciumtetrachloridhaltigen ($SiCl_4$) Rohgasstrom,

b) Entfernung von Verunreinigungen aus dem entstehenden Rohgasstrom durch Wäsche mit kondensierten Chlorsilanen wobei ein gereinigter trichlorsilan- und siliciumtetrachloridhaltiger Rohgasstrom und eine im wesentlichen aus $SiCl_4$ bestehende homogene flüssige Phase entstehen, die aus dem Prozess herausgeführt wird,

c) Kondensation und nachfolgende destillative Auftrennung des gereinigten Rohgasstroms in einen im wesentlichen aus $SiCl_4$ und einen im wesentlichen aus $SiHCl_3$ bestehenden Teilstrom,

d) Rückführung des im wesentlichen aus $SiCl_4$ bestehenden Teilstroms in die Umsetzung von metallurgischem Silicium mit $SiCl_4$ und $H_2$

e) Disproportionierung des trichlorsilanhaltigen Teilstroms zu $SiCl_4$ und $SiH_4$ und

f) Rückführung des bei der Disproportionierung gebildeten $SiCl_4$ in die Umsetzung von metallurgischem Silicium mit $SiCl_4$ und $H_2$, welches dadurch gekennzeichnet ist, dass der trichlorsilan- und siliciumtetrachloridhaltige Rohgasstrom vor der Wäsche mit kondensierten Chlorsilanen durch Gasfiltration weitestgehend von Feststoffen befreit wird,

die Wäsche mit kondensierten Chlorsilanen bei einem Druck von 25 bis 40 bar und einer Temperatur von mindestens 150°C in einer mehrstufigen Destillationskolonne vorgenommen und so betrieben wird, dass 0,1 bis 3 Gew.-% des trichlorsilan- und siliciumtetrachloridhaltigen Rohgasstroms als kondensierte im wesentlichen aus $SiCl_4$ bestehende flüssige Phase gewonnen werden,

diese flüssige im wesentlichen aus $SiCl_4$ bestehende Phase aus dem $SiCl_4$-Kreislauf entnommen wird und diese flüssige Phase außerhalb des $SiCl_4$-Kreislaufs anschließend auf einen Druck von 1 bar entspannt und auf eine Temperatur im Bereich von 10 bis 40°C abgekühlt wird, wobei gelöste Verunreinigungen ausfallen und

die ausgefallenen Verunreinigungen durch Filtration abgetrennt werden.

Vorzugsweise wird die Wäsche mit kondensierten Chlorsilanen so betrieben, dass 0,5 bis 1,5 Gew.-% des trichlorsilan- und siliciumtetrachloridhaltigen Rohgasstroms als kondensierte im wesentlichen aus $SiCl_4$ bestehende flüssige Phase gewonnen werden.

Unter metallurgischem Silicium wird Silicium verstanden, das bis etwa 3 Gew.-% Eisen, 0,75 Gew.-% Aluminium, 0,5 Gew.-% Calcium und weitere Verunreinigungen enthalten kann, wie sie üblicherweise in Silicium zu finden sind und das vorzugsweise durch carbothermische Reduktion von Siliciumdioxid gewonnen wurde.

Vorzugsweise wird die Reaktion von metallurgischem Silicium mit $SiCl_4$ und $H_2$ (Schritt a)) bei einer Temperatur von 500 bis 800°C und einem Druck von 25 bis 40 bar durchgeführt.

Für die Gasfiltration können beispielsweise Zyklone oder Heißgasfilter eingesetzt werden. In einer vorteilhaften Variante des erfindungsgemäßen Verfahrens erfolgt die Gasfiltration in mehreren hintereinander geschalteten Zyklonen oder Multizyklonen. Derartige Filterapparate sind beispielsweise in Ullmann's Encyclopedia of Industrial Chemistry, Volume B 2, Unit Operation I, 5th complete revised Edition, VCH-Verlagsgesellschaft, Weinheim S. 13-4 bis 13-8 beschrieben. Alternativ dazu können auch Heißgasfilter mit Sintermetall- oder Keramikkerzen oder Kombinationen von Zyklonen und Heißgasfiltern eingesetzt werden. Durch Einsatz der genannten Filterapparate gelingt eine weitestgehende Abtrennung der festen Bestandteile des Rohgasstroms, was einen störungsfreien Betrieb der nachfolgenden Wäsche mit kondensierten Chlorsilanen ermöglicht. Noch im Rohgasstrom nach der Gasfiltration befindliche Verunreinigungen wie Metallchloride, Nichtmetallchloride, Siloxane und Polysilane werden im erfindungsgemäßen Verfahren in der kondensierten im wesentlichen aus $SiCl_4$ bestehende flüssigen Phase gelöst und können so mit dieser in einfacher Art und Weise aus dem Silan-Herstellungsprozess ausgeschleust werden.

Ein weiterer Vorteil besteht darin, dass bei dieser Vorgehensweise ein siliciummetallhaltiger Feststoff erhalten wird, der aufgrund seines hohen Gehalts an Silicium einer Verwertung in metallurgischen Prozessen wie beispielsweise der Herstellung von Eisenlegierungen zugeführt werden kann. Dazu kann der siliciummetall- und metallchloridhaltige Feststoff beipielsweise mit Alkaliverbindungen wie Natronlauge, $Na_2CO_3$, $NaHCO_3$ und CaO und Wasser umgesetzt, filtriert und zur Entfernung von Chlorid mit Wasser gewaschen und ggf. getrocknet werden.

Die bei der Wäsche mit kondensierten Chlorsilanen und der nachfolgenden Druckerniedrigung und Abkühlung anfallende im wesentlichen aus $SiCl_4$ bestehende flüssige Phase wird vorzugsweise mit Hilfe von Tellerdruckfiltern von den ausgefallenen Verunreinigungen befreit. Als Filtermittel werden Sintermetalle oder besonders bevorzugt versinterte Drahtgewebe eingesetzt. Derartige Filtermittel sind im Handel unter den Markennamen Poroplate® und Fuji-Plate® erhältlich. Alternativ dazu können auch Dekanter zur Abtrennung der ausgefallenen Verunreinigungen eingesetzt werden.

Das dabei anfallende Filtrat eignet sich hervorragend als Rohstoff für die Herstellung von pyrogener Kieselsäure und wird daher vorzugsweise dieser Verwendung zugeführt. Eine weitere Aufarbeitung, beispielsweise durch Destillation ist nicht erforderlich. Der bei der Filtration anfallende Feststoff kann in bekannter Weise mit Alkaliverbindungen wie beispielsweise Natronlauge, $Na_2CO_3$, $NaHCO_3$ und CaO inertisiert und nach der Inertisierung als Rohstoff bei der Zementherstellung eingesetzt werden.

In einer besonders bevorzugten Variante des erfindungsgemäßen Verfahrens wird der durch Entnahme des im wesentlichen aus $SiCl_4$ bestehenden Filtrats entstehende Bedarf an Chlorid-Äquivalenten durch Einsatz von 0,05 bis 10 Gew.-% Chlorwasserstoff (HCl), bezogen auf die Masse des zugeführten $SiCl_4$, als zusätzlicher Reaktand bei der Umsetzung von metallurgischem Silicium mit $SiCl_4$ und $H_2$ ausgeglichen. Vorzugsweise wird HCl in einer Menge von 0,5 bis 3 Gew.-% eingesetzt.

Der Einsatz von HCl in einer Menge von 0,05 bis 10 Gew.-% bezogen auf die Masse des zugeführten $SiCl_4$ als zusätzlicher Reaktand bewirkt eine unerwartete Beschleunigung der Umsetzung, die letzlich dazu führt, dass sehr hohe $SiHCl_3$-Ausbeuten, das heißt hohe Umsetzungsgrade des eingesetzten $SiCl_4$ in der Nähe des thermodynamischen Gleichgewichts, und gleichzeitig hohe Gesamtausbeuten, d.h. eine weitgehende Verwertung des eingesetzten metallurgischen Siliciums, erreicht werden.

Chlorwasserstoff wird vorzugsweise in wasserfreier Form als Chlorwasserstoffgas eingesetzt.

Chlorwasserstoff kann beispielsweise separat in den Reaktor eingespeist werden, in dem die Umsetzung zu Trichlorsilan durchgeführt werden soll. Es ist jedoch auch möglich, Chlorwasserstoff gemeinsam mit den in den Reaktor einzuführenden, gasförmigen bzw. verdampfbaren Ausgangsstoffen Wasserstoff und/oder Siliciumtetrachlorid zuzuführen.

Die bevorzugte Variante des erfindungsgemäßen Verfahrens unter Zusatz von Chlorwasserstoff bei der Umsetzung von metallurgischem Silicium mit $SiCl_4$ und $H_2$ zeichnet sich vor allem dadurch aus, dass durch Einsatz der erfindungsgemäßen Mengen an HCl als zusätzlicher Reaktand eine Beschleunigung der Reaktion erfolgt und dass eine höherer Nutzungsgrad des eingesetzten metallurgischen Siliciums erreicht wird, was die Wirschaftlichkeit des Verfahrens zur Herstellung von Silan deutlich verbessert.

So führt die Zugabe der vorzugsweise zuzusetzenden Menge an Chlorwasserstoff zu einer schnelleren Aktivierung des Siliciums. Wird frisches Silicium mit Wasserstoff und Siliciumtetrachlorid umgesetzt oder die Umsetzung nach einer Betriebsunterbrechung wieder aufgenommen, tritt eine Induktionsperiode auf, die beispielsweise bei einer Reaktionstemperatur von 600°C und einem $H_2$ : $SiCl_4$ - Molverhältnis von 2 : 1 etwa 100 Minuten beträgt. Diese Induktionsperiode wird bei Zugabe von 2 Gew-% Chlorwasserstoff, bezogen auf Siliciumtetrachlorid, unter sonst gleichen Bedingungen auf 45 Minuten verkürzt. Da bei der Reaktionsführung in einem kontinuierlich betriebenen Wirbelbettreaktor stets ein wesentlicher Teil des Wirbelbettes ein frisch zugeführtes Silicium beinhaltet, wirkt sich dessen schnellere Aktivierung beschleunigend auf den Gesamtprozess aus.

Darüberhinaus bewirkt der Zusatz von Chlorwasserstoff, dass der Angriff der Reaktionsgase an der gesamten Silicium-Fläche erfolgt. Bei Hinzufügung von festen Katalysatoren zu dem umzusetzenden Silicium findet die Reaktion mit dem Wasserstoff/Siliciumtetrachlorid-Gas unmittelbar am Rand der Katalysatorkörner statt und führt dort zu kraterförmigen Vertiefungen. Beim Voranschreiten der Reaktion in die Tiefe werden die zuvor mit Katalysatorteilchen belegten Siliciumflächen untergraben, diese Teilchen lösen sich vom Siliciumkorn und werden als kleine Teilchen aus dem Wirbelbett ausgetragen. Damit stehen der erwünschten Umsetzung weder diese ausgetragenen Silicium-Teile noch die daran anhaftenden Katalysatoren zur Verfügung. Folgen sind eine schlechtere Gesamtausbeute und eine abnehmende Reaktionsgeschwindigkeit des an Katalysator verarmten Siliciumteilchens. Die prinzipiell gleichen Erscheinungen treten auf bei der unkatalysierten Umsetzung von Silicium mit Wasserstoff/Siliciumtetrachlorid ohne Zusatz von Chlorwasserstoff. Dabei schreitet die Umsetzung in kraterförmigen Vertiefungen längs der durch die ausgeschiedenen Verunreinigungen gebildeten Bänder voran. Diese Bänder enthalten die im Silicium vorhandenen und durch die Rohstoffe und den Silicium-Herstellprozess eingebrachten Verunreinigungen, im wesentlichen Eisen, Aluminium, Calcium, Titan, die ebenfalls reaktionsbeschleunigend wirken. Im Gegensatz dazu findet die Umsetzung des Siliciums mit Wasserstoff/Siliciumtetrachlorid in Gegenwart von Chlorwasserstoff auf der gesamten Oberfläche der Siliciumkörner statt, wobei sich auf der Oberfläche der Siliciumkörner eine Vielzahl kraterförmiger Vertiefungen ausbilden. Da die gesamte Oberfläche der Siliciumkörner wesentlich mehr Angriffsfläche bietet, als nur die mit Katalysatorpartikeln besetzten Stellen bzw. die die Verunreinigungen gesammelt enthaltenden Bänder an den Korngrenzen, resultiert daraus eine starke Vergrößerung der an der Umsetzung teilnehmenden Silicium-Fläche und somit eine Beschleunigung der flächenabhängigen Umsetzungsgeschwindigkeit.

Die bevorzugte Ausführungsform des erfindungsgemäßen Verfahrens unter Zusatz von Chlorwasserstoff bei der Umsetzung von metallurgischem Silicium mit $SiCl_4$ und $H_2$ zeichnet sich zudem durch eine Verminderung des unerwünschten Siliciumaustrags aus. Bei der flächigen Abreaktion der Siliciumkörner in Anwesenheit von Chlorwasserstoff unterbleibt die Unterwanderung der Katalysator enthaltenden Stellen und die kornsprengende, Gräben ziehende Reaktion entlang der Bänder, die die Verunreinigungen enthalten, so dass Absprengungen kleiner Siliciumteilchen, die dann durch die Reaktionsgase aus dem Wirbelbett ausgetragen werden, unterbleiben. Somit steigen sowohl die Ausbeute an Trichlorsilan bezogen auf das eingesetzte Siliciumtetrachlorid, als auch bezogen auf eingesetztes Silicium.

Darüberhinaus führt der Zusatz von Chlorwasserstoff zu einer gleichbleibenden Reaktionsgeschwindigkeit mit zunehmendem Silicium-Abbau. Im Gegensatz zur katalysierten Reaktion ohne Chlorwasserstoff-Zusatz nimmt die Reaktionsgeschwindigkeit der Silicium/Wasserstoff/Siliciumtetrachlorid-Umsetzung in Gegenwart von Chlorwasserstoff nicht wesentlich ab. Überraschend ist dieses Ergebnis schon deshalb, weil bei der Abreaktion die Siliciumkörner kleiner werden, die Oberfläche einer vorgegebenen Menge Silicium also abnehmen sollte und die oberflächenbezogene Verweilzeit der Reaktionsgase ebenso abnimmt.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Der Werkstoff des Reaktors muss den genannten Reaktionsbedingungen der $SiHCl_3$-Synthese standhalten. Die Anforderungen an die Beständigkeit der Konstruktionswerkstoffe für den Reaktor gelten ebenso für gegebenenfalls vor- und nachgeschaltete Anlagenteile, wie Zyklone oder Wärmetauscher. Diese Anforderungen werden beispielsweise von Nickelbasislegierungen erfüllt.

Durch den Einsatz von Katalysatoren ist eine weitere Beschleunigung der Reaktion von metallurgischem Silicium mit $SiCl_4$, $H_2$ und gegebenefalls HCl erreichbar. Besonders geeignete Katalysatoren sind Kupfer, Eisen, Kupfer- oder Eisenverbindungen oder deren Mischungen.

Es hat sich überraschend gezeigt, dass die Katalysatoren dann eine besonders hohe Wirksamkeit entfalten, wenn das metallurgische Silicium in gemahlener Form vorliegt und vor der Reaktion mit den Katalysatoren intensiv vermischt wird.

Vorzugsweise wird daher im erfindungsgemäßen Verfahren die Umsetzung zu Trichlorsilan (Schritt a)) in Gegenwart eines Katalysators durchgeführt, wobei das metallurgische Silicium vor der Reaktion mit dem Katalysator intensiv gemischt wird.

Vorzugsweise wird dabei das Silicium in feinteiliger Form, besonders bevorzugt mit einem mittleren Korndurchmesser von 10 bis 1000 μm, insbesondere bevorzugt von 100 bis 600 μm, eingesetzt. Der mittlere Korndurchmesser wird dabei als Zahlenmittel der Werte bestimmt, die sich bei einer Siebanalyse des Siliciums ergeben.

Zum Mischen von Katalysator und Silicium werden vorzugsweise Apparate eingesetzt, die eine sehr intensive Vermischung gewährleisten. Hierfür eignen sich besonders Mischer mit rotierenden Mischwerkzeugen. Solche Mischer sind beispielsweise in "Ullmann's Encyclopedia of Industrial Chemistry, Volume B2, Unit Operations I, S.27-1 bis 27-16, VCH Verlagsgesellschaft, Weinheim" beschrieben. Besonders bevorzugt werden Pflugscharmischer eingesetzt.

Bei dem intensiven Mischen kann der Katalysator weiter zerkleinert werden, was beim Mischvorgang zu einer sehr guten Verteilung und einer sehr guten Anhaftung des Katalysators auf der Siliciumoberfläche führt. Somit können auch Katalysatoren eingesetzt werden, die nicht feinteilig verfügbar sind bzw. nicht auf die erforderliche Feinheit zerkleinerbar sind.

Bei unzureichender Vermischung wird ein großer Teil des Katalysators wegen schlechter Haftung an den Siliciumpartikeln mit den gasförmigen Reaktanden bzw. Produkten direkt aus dem Wirbelbett ausgetragen und steht somit nicht mehr für die Reaktion zur Verfügung. Dies führt zu einem erhöhten Bedarf an Katalysator, was die Wirtschaftlichkeit des Verfahrens beeinträchtigt. Durch die intensive Vermischung von Silicium und Katalysator wird dies verhindert.

Die Zeit für die Vermischung von Silcium und Katalysator beträgt vorzugsweise 1 bis 60 Minuten. Längere Mischzeiten sind in der Regel nicht erforderlich. Besonders bevorzugt sind Mischzeiten von 5 bis 20 Minuten.

Die intensive Vermischung von Katalysator und Silicium kann beispielsweise in inerter Atmosphäre oder in Gegenwart von Wasserstoff oder anderen reduzierend wirkenden Gasen, beispielsweise Kohlenmonoxid erfolgen. Dies verhindert unter anderem die Bildung einer oxidischen Schicht auf den einzelnen Siliciumpartikeln. Eine solche Schicht verhindert den direkten Kontakt zwischen Katalysator und Silicium, wodurch die Umsetzung mit Siliciumtetrachlorid, Wasserstoff und gegebenenfalls Chlorwasserstoff zu Trichlorsilan entsprechend schlechter katalysiert würde.

Eine inerte Atmosphäre kann beispielsweise durch den Zusatz eines inerten Gases während des Vermischungsvorgangs erzeugt werden. Geeignete inerte Gase sind beispielsweise Stickstoff und/oder Argon.

Bevorzugt erfolgt die Vermischung von Silicium und Katalysator in Gegenwart von Wasserstoff.

Als Katalysator können prinzipiell alle für die Umsetzung von Silicium mit Siliciumtetrachlorid, Wasserstoff und gegebenenfalls Chlorwasserstoff bekannten Katalysatoren eingesetzt werden.

Besonders geeignete Katalysatoren sind Kupferkatalysatoren und Eisenkatalysatoren. Beispiele hierfür sind Kupferoxidkatalysatoren (z.B. Cuprokat®, Hersteller Norddeutsche Affinerie); Kupferchlorid (CuCl, CuCl$_2$), Kupfermetall, Eisenoxide (z.B. Fe$_2$O$_3$, Fe$_3$O$_4$), Eisenchloride (FeCl$_2$, FeCl$_3$) und deren Mischungen.

Bevorzugte Katalysatoren sind Kupferoxidkatalysatoren und Eisenoxidkatalysatoren.

Es hat sich insbesondere beim Einsatz von Kupferoxidkatalysatoren und Eisenoxidkatalysatoren als vorteilhaft erwiesen, die Vermischung mit Silcium bei einer Temperatur von 100 bis 400°C, vorzugsweise bei 130 bis 250°C durchzuführen. Bei dieser Vorgehensweise werden an den Katalysatoren anhaftende Reste von Feuchtigkeit entfernt, die die Reaktion von Silicium mit SiCl$_4$, H$_2$ und gegebenenfalls HCl negativ beeinflussen. Beim Vermischen in Gegenwart von reduzierenden Gasen, vorzugsweise Wasserstoff, werden darüberhinaus die oxidischen Bestandteile der Katalysatoren reduziert, was durch Sauerstoff bzw. Oxide verursachte Ausbeuteminderungen bei der Reaktion von metallurgischem Silicium mit SiCl$_4$ und H$_2$ verhindert. Darüberhinaus wird durch diese Vorgehensweise eine verbesserte Anhaftung von Katalysator an die Siliciumoberfläche erreicht, wodurch Verluste an Katalysator im Wirbelbett weitgehend vermieden werden.

Es ist auch möglich, Mischungen aus Kupfer- und/oder Eisenkatalysatoren mit weiteren katalytisch aktiven Bestandteilen einzusetzen. Solche katalytisch aktiven Bestandteilen sind beispielsweise Metallhalogenide, wie z.B. Chloride, Bromide oder Iodide des Aluminiums, Vanadiums oder Antimons.

Vorzugsweise beträgt die Menge an eingesetztem Katalysator berechnet als Metall 0,5 bis 10 Gew.-%, insbesondere bevorzugt 1 bis 5 Gew.-%, bezogen auf die Menge an eingesetztem Silicium.

Das Molverhältnis von Wasserstoff zu Siliciumtetrachlorid bei der Umsetzung von metallurgischem Silicium mit SiCl$_4$ und H$_2$ kann beispielsweise 0,25:1 bis 4:1 betragen. Bevorzugt ist ein Molverhältnis von 0,6:1 bis 2:1.

Der bei der destillativen Auftrennung des gereinigten trichlorsilan- und siliciumtetrachloridhaltigen Rohgasstroms anfallende im wesentlichen aus SiHCl$_3$ bestehende Teilstrom wird vorzugsweise in einer Kolonne bei einem Druck von 1 bis 10 bar disproportioniert, wobei die Kolonne mindestens zwei reaktiv/destillative Reaktionsbereiche aufweist.

Die Disproportionierung erfolgt dabei an katalytisch wirkenden Feststoffen, bevorzugt in Katalysatorbetten, die jeweils aus einer für die Disproportionierungsprodukte durchströmbaren Schüttgutschicht aus Festkörpern aus den katalytisch wirksamen Feststoffen bestehen. Statt einer Schüttgutschicht können im Reaktionsbereich auch gepackte Katalysatorkörper vorgesehen sein.

Geeignete katalytisch wirksame Feststoffe sind bekannt und beispielsweise in der DE 2 507 864 A1 beschrieben. Es sind beispielsweise solche Feststoff geeignet, die an einem Gerüst aus Polystyrol, vernetzt mit Divinylbenzol, Amino- oder Alkylenamino-Gruppen tragen. Als Amino- oder Alkylenamino-Gruppen seien beispielsweise genannt: Dimethylamino-, Diethylamino-, Ethylmethylamino-, Di-n-propylamino-, Di-iso-propylamino-, Di-2-chlorethylamino-, Di-2-chlorpropylamino-Gruppen und deren Hydrochloride oder aber die durch Methylierung, Ethylierung, Propylierung, Butylierung, Hydroxyethylierung oder Benzylierung daraus gebildeten Trialkylammonium-Gruppen mit Chlorid als Gegenion. Selbstverständlich können im Fall quartärer Ammoniumsalze oder protonierter Ammoniumsalze auch katalytisch wirksame Feststoffe mit anderen Anionen, z.B. Hydroxid, Sulfat, Hydrogensulfat, Bicarbonat u.a. in das erfindungsgemäße Verfahren eingeführt werden, eine Umwandlung in die Chloridform ist unter den Reaktionsbedingungen mit der Zeit aber unvermeidbar, was auch für organische Hydroxygruppen gilt. Bevorzugt sind demnach solche Ammoniumsalze, die Chlorid als Gegenion enthalten.

Als katalytisch wirksame Feststoffe sind beispielsweise auch Feststoffe geeignet, die aus einem Polyacrylsäure-Gerüst, speziell einem Polyacrylamid-Gerüst bestehen, das z.B. über eine Alkylgruppe Trialkylbenzylammonium gebunden hat.

Eine andere geeignete Gruppe katalytisch wirksamer Feststoffe sind beispielsweise solche, die an einem Polystyrol-Gerüst, vernetzt mit Divinylbenzol, Sulfonat-Gruppen angebunden haben, denen als Kationen tertiäre oder quartäre Ammoniumgruppen gegenüberstehen.

Im Regelfall sind makroporöse oder mesoporöse Austauscherharze besser als Gelharze geeignet.

Bevorzugt wird das erfindungsgemäße Verfahren in ein Gesamtverfahren zur Herstellung von Reinst-Silicium integriert.

Besonders bevorzugt wird das erfindungsgemäße Verfahren in ein mehrstufiges Gesamtverfahren zur Herstellung von Reinst-Silicium integriert, wie es beispielsweise in "Economics of Polysilicon Process, Osaka Titanium Co., DOE/JPL 1012122 (1985), 57-78" beschrieben ist und das folgende Schritte umfasst:

a) Herstellung von Trichlorsilan,
b) Disproportionierung von Trichlorsilan unter Gewinnung von Silan,
c) Reinigung des Silans zu Reinst-Silan und
d) Thermische Zersetzung des Silans in einem Wirbelbettreaktor unter Abscheidung von Reinst-Silicium auf Silicium-Partikeln, die das Wirbelbett bilden.

Anhand der folgenden Beispiele werden die besonderen Vorteile eines Chlorwasserstoffzusatzes bei der Umsetzung von metallurgischem Silicium mit $SiCl_4$ und $H_2$, wie er in Schritt a) einer bevorzugten Variante des erfindungsgemäßen Verfahrens erfolgt, näher erläutert. Die Beispiele sind jedoch nicht als Einschränkung des Erfindungsgedankens zu verstehen.

## Beispiel 1a

In einem Wirbelschichtreaktor mit einem Innendurchmesser (I.D.) von 0,05 m wurden 400 g Silicium (99,3 Gew.-% Silicium, mittlerer Teichendurchmesser Dp = 250-315 μm) vorgelegt und bei einer Temperatur T = 600°C und einem Gesamtdruck von $p_{ges}$= 1,1 bar mit Wasserstoff und Siliciumtetrachlorid umgesetzt. Das Mol-Verhältnis $H_2/SiCl_4$ betrug 2 bei Anwesenheit von 20 Vol.-% $N_2$. Die Umsetzung wurde unter Zusatz von 2 Gew-% HCl, bezogen auf die Masse an Siliciumtetrachlorid, durchgeführt. Die Zeit bis zum Erreichen von 95 % der stationären Ausbeute an Trichlorsilan $\tau_{95\,\%}$ betrug 45 min.

## Beispiel 1b (Vergleichsbeispiel)

Die Umsetzung gemäß Beispiel 1a wurde wiederholt, wobei jedoch kein HCl zugesetzt wurde. Die Zeit bis zum Erreichen von 95 % der stationären Ausbeute an Trichlorsilan $\tau_{95\,\%}$ betrug 100 min.

## Beispiel 2a

In einem Wirbelschichtreaktor mit einem Innendurchmesser (I.D.) von 0,05 m wurden 400 g Silicium (99,3 Gew.-% Silicium, mittlerer Teichendurchmesser Dp = 250-315 μm) vorgelegt und bei einer Temperatur T = 600°C und einem Gesamtdruck von $p_{ges}$= 1,1 bar mit Wasserstoff und Siliciumtetrachlorid umgesetzt. Das Mol-Verhältnis $H_2/SiCl_4$ betrug 2 bei Anwesenheit von 20 Vol.-% $N_2$. Die Umsetzung wurde mehrere Tage durchgeführt. Es wurden kontinuierlich 1,5±0,5 Gew.-% HCl, bezogen auf die Masse an Siliciumtetrachlorid, zugegeben. Nach 24,2 % Abreaktion des Siliciums wurde die Reaktionsmasse mittels Raster-Elektronenmikroskopie untersucht. Es zeigt sich, dass eine Abreaktion des Siliciums auf der gesamten Oberfläche der Siliciumpartikel erfolgt ist.

## Beispiel 2b (Vergleichsbeispiel)

Die Umsetzung gemäß Beispiel 2a wurde wiederholt, wobei diesmal jedoch kein Chlorwasserstoff zugegeben wurde. Nach 23,4 % Abreaktion des Siliciums wurde die Reaktionsmasse mittels Raster-Elektronenmikroskopie untersucht. Es lässt sich erkennen, dass das Silicium nur an einzelnen Punkten und Kanten abreagiert ist.

**Beispiel 2c (Vergleichsbeispiel)**

In einem Wirbelschichtreaktor mit einem Innendurchmesser (I.D.) von 0,05 m wurden in Anlehnung an Beispiel 2a 400 g Silicium (99,3 Gew.-% Silicium, mittlerer Teichendurchmesser Dp = 160-195 $\mu$m) vorgelegt und bei einer Temperatur T = 600°C und einem Gesamtdruck von $p_{ges}$= 1,1 bar mit Wasserstoff und Siliciumtetrachlorid umgesetzt. Das Mol-Verhältnis $H_2/SiCl_4$ betrug 2 bei Anwesenheit von 20 Vol.-% $N_2$. Die Umsetzung wurde mehrere Tage durchgeführt. Es wurde jedoch kein HCl zugegeben, stattdessen wurde die Reaktion in Gegenwart von 1 Gew.-% Cu in Form von Cu-Metall/$Cu_2O$/CuO als Katalysator durchgeführt. Nach 31,4 % Abreaktion des Siliciums wurde die Reaktionsmasse mittels Raster-Elektronenmikroskopie untersucht. Es zeigt sich, dass zwar eine flächige Abreaktion des Siliciums erfolgt ist, dass aber auch eine Unterwanderung der Oberfläche unter Bildung großer Löcher zu beobachten ist.

**Beispiel 3a**

Beispiel 2 a wurde wiederholt, wobei die Reaktion diesmal jedoch nicht nach 24,2 % Abreaktion des Siliciums abgebrochen wurde. Die Menge an ausgetragenem Material wurde anhand der in einem Zyklon abgeschiedenen Mengen bestimmt. Die Austragsmenge nahm mit dem Abreaktionsgrad beständig ab und lag bereits bei einem Abreaktionsgrad von 15 % bei kleiner 0,5 Gew.-%, bezogen auf die Menge an abreagiertem Silicium.

**Beispiel 3b (Vergleichsversuch)**

Beispiel 2 b wurde wiederholt, wobei die Reaktion diesmal jedoch nicht nach 23,4 % Abreaktion des Siliciums abgebrochen wurde. Die Menge an ausgetragenem Material wurde anhand der in einem Zyklon abgeschiedenen Mengen bestimmt. Die Austragsmenge nahm bis zu einem Abreaktionsgrad von etwa 15 % zu und anschließend ab. Bei einem Abreaktionsgrad von 15 % lag die Austragsmenge bei über 1,0 Gew.-%, bezogen auf die Menge an abreagiertem Silicium.

**Beispiel 3c (Vergleichsversuch)**

Beispiel 2 c wurde wiederholt, wobei die Reaktion diesmal jedoch nicht nach 31,4 % Abreaktion des Siliciums abgebrochen wurde. Die Menge an ausgetragenem Material wurde anhand der in einem Zyklon abgeschiedenen Mengen bestimmt. Die Austragsmenge nahm mit dem Abreaktionsgrad beständig zu und lag bereits bei einem Abreaktionsgrad von 15 % bei größer 1,0 Gew.-% bezogen auf die Menge an abreagiertem Silicium. Bei einem Abreaktionsgrad von 45 % wurden Austragsmengen größer 7,0 Gew.-%, bezogen auf die Menge an abreagiertem Silicium beobachtet.

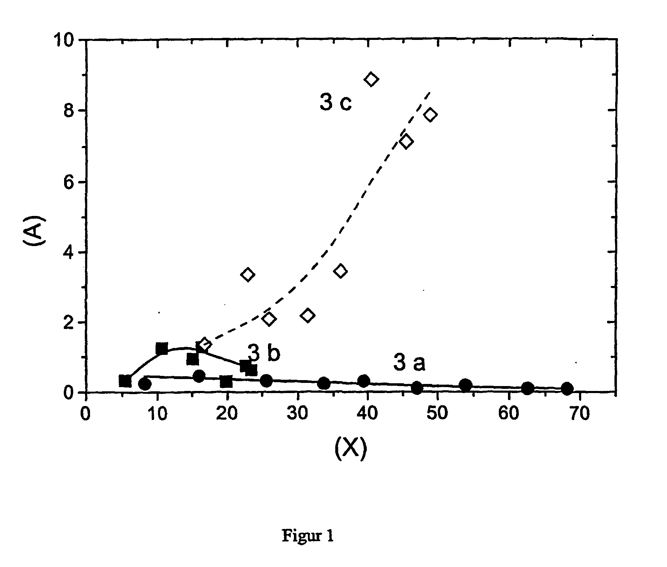

Ein Vergleich der Austragsmengen bei Reaktionsführung gemäß der Beispiele 3a, 3b und 3c ist aus Figur 1 ersichtlich, in der die Austragsmenge (A) bezogen auf die Menge an abreagiertem Silicium in Gew.-% gegen den Abreaktionsgrad (X) in % aufgetragen ist. Die Bezeichnung der Kurven mit 3a, 3b, 3c entspricht der Nummerierung der Beispiele.

**Beispiel 4**

In einem Wirbelschichtreaktor mit einem Innendurchmesser (I.D.) von 0,05 m wurden 400 g Silicium (99,3 Gew.-% Silicium, mittlerer Teichendurchmesser (Dp) bei unkatalysierter Reaktionsführung und mit HCl-Zugabe: Dp = 250-315 $\mu$m; Cu-katalysiert: Dp = 160-195 $\mu$m) vorgelegt und die Hydrochlorierungsreaktion wurde bei T = 600°C und einem Gesamtdruck von $p_{ges}$= 1,1 bar mehrere Tage durchgeführt. Das Mol-Verhältnis $H_2/SiCl_4$ betrug 2 bei Anwesenheit von 20 Vol.-% $N_2$. Es wurden drei Formen der Reaktionsführung durchgeführt: *a)* nicht-katalytisch ohne HCl-Einspeisung (Vergleich), *b)* Cu-katalysiert ohne HCl -Einspeisung (1 % Cu als Cu-Metall/$Cu_2O$/CuO) (Vergleich) und *c)* ohne Cu-Katalysator mit zusätzlicher Einspeisung von 1,5±0,5 Gew.-% HCl. Bei den unterschiedlichen Formen der Reaktionsführung wurde die Ausbeute zum Zielprodukt Trichlorsilan bestimmt. Es zeigt sich, dass die Ausbeute bei einer erfindungsgemäßen Reaktionsführung mit HCl im Verlauf der Reaktion nicht so stark abnimmt, wie bei der un- bzw. Cu-katalysierten Reaktionsführung ohne HCl-Zugabe.

**Patentansprüche**

1.  Verfahren zur Herstellung von Silan ($SiH_4$) durch

      a) Umsetzung von metallurgischem Silicium mit Siliciumtetrachlorid ($SiCl_4$) und Wasserstoff ($H_2$) zu einem

trichlorsilan- (SiHCl$_3$) und siliciumtetrachloridhaltigen (SiCl$_4$) Rohgasstrom,

b) Entfernung von Verunreinigungen aus dem entstehenden Rohgasstrom durch Wäsche mit kondensierten Chlorsilanen wobei ein gereinigter trichlorsilan- und siliciumtetrachloridhaltiger Rohgasstrom und eine im wesentlichen aus SiCl$_4$ bestehende homogene flüssige Phase entstehen, die aus dem Prozess herausgeführt wird,

c) Kondensation und nachfolgende destillative Auftrennung des gereinigten Rohgasstroms in einen im wesentlichen aus SiCl$_4$ und einen im wesentlichen aus SiHCl$_3$ bestehenden Teilstrom,

d) Rückführung des im wesentlichen aus SiCl$_4$ bestehenden Teilstroms in die Umsetzung von metallurgischem Silicium mit SiCl$_4$ und H$_2$

e) Disproportionierung des SiHCl$_3$-haltigen Teilstroms zu SiCl$_4$ und SiH$_4$ und

f) Rückführung des bei der Disproportionierung gebildeten SiCl$_4$ in die Umsetzung von metallurgischem Silicium mit SiCl$_4$ und H$_2$ **dadurch gekennzeichnet, dass**
der trichlorsilan- und siliciumtetrachloridhaltige Rohgasstrom vor der Wäsche mit kondensierten Chlorsilanen durch Gasfiltration weitestgehend von Feststoffen befreit wird,
die Wäsche mit kondensierten Chlorsilanen bei einem Druck von 25 bis 40 bar und einer Temperatur von mindestens 150°C in einer mehrstufigen Destillationskolonne vorgenommen und so betrieben wird, dass 0,1 bis 3 Gew.-% des trichlorsilan- und siliciumtetrachloridhaltigen Rohgasstroms als kondensierte im wesentlichen aus SiCl$_4$ bestehende flüssige Phase gewonnen werden,
diese flüssige im wesentlichen aus SiCl$_4$ bestehende Phase aus dem SiCl$_4$-Kreislauf entnommen und außerhalb des SiCl$_4$-Kreislaufs anschließend auf einen Druck von 1 bar entspannt und auf eine Temperatur im Bereich von 10 bis 40°C abgekühlt wird, wobei gelöste Verunreinigungen ausfallen und
die ausgefallenen Verunreinigungen durch Filtration abgetrennt werden.

2. Verfahren gemäß Anspruch 1, **dadurch gekennzeichnet, dass** die Gasfiltration mit mehreren hintereinander geschalteten Zyklonen oder einem Multizyklon durchgeführt wird.

3. Verfahren gemäß mindestens einem der Ansprüche 1 bis 2, **dadurch gekennzeichnet, dass** die Abtrennung der ausgefallenen Verunreinigungen aus der im wesentlichen aus SiCl$_4$ bestehenden flüssigen Phase durch Filtration über Tellerdruckfilter mit versintertem Drahtgewebe als Filtermittel erfolgt.

4. Verfahren gemäß Anspruch 3, **dadurch gekennzeichnet, dass** das im wesentlichen aus SiCl$_4$ bestehende Filtrat bei der Herstellung von pyrogener Kieselsäure als Rohstoff eingesetzt wird.

5. Verfahren gemäß mindestens einem der Ansprüche 1 bis 4, **dadurch gekennzeichnet, dass** Chlorwasserstoff (HCl) in einer Menge von 0,05 bis 10 Gew.-% bezogen auf die Masse des zugeführten SiCl$_4$, als zusätzlicher Reaktand bei der Umsetzung von metallurgischem Silicium mit SiCl$_4$ und H$_2$ eingesetzt wird.

6. Verfahren gemäß mindestens einem der Ansprüche 1 bis 5, **dadurch gekennzeichnet, dass** HCl in einer Menge von 0,5 bis 3 Gew.-% bezogen auf die Masse des zugeführten SiCl$_4$, als zusätzlicher Reaktand bei der Umsetzung von metallurgischem Silicium mit SiCl$_4$ und H$_2$ eingesetzt wird.

7. Verfahren gemäß mindestens einem der Ansprüche 1 bis 6, **dadurch gekennzeichnet, dass** der zugesetzte Chlorwasserstoff in wasserfreier Form als Chlorwasserstoffgas eingesetzt wird.

8. Verfahren gemäß mindestens einem der Ansprüche 1 bis 7, **dadurch gekennzeichnet, dass** die Reaktion von metallurgischem Silicium mit SiCl$_4$ und H$_2$ in Gegenwart eines Katalsyators durchgeführt wird.

9. Verfahren gemäß Anspruch 8, **dadurch gekennzeichnet, dass** als Katalysator Kupfer, Eisen, Kupferverbindungen, Eisenverbindungen oder deren Mischungen eingesetzt werden

10. Verfahren gemäß mindestens einem der Ansprüche 1 bis 9, **dadurch gekennzeichnet, dass** die Reaktion von metallurgischem Silicium mit SiCl$_4$ und H$_2$ bei einer Temperatur von 500 bis 800°C und einem Druck von 25 bis 40 bar erfolgt.

**Claims**

1. Method for producing silane ($SiH_4$) by

    a) reacting metallurgical silicon with silicon tetrachloride ($SiCl_4$) and hydrogen ($H_2$) to form a crude gas stream containing trichlorosilane ($SiHCl_3$) and silicon tetrachloride ($SiCl_4$),

    b) removing impurities from the resulting crude gas stream by washing with condensed chlorosilanes to produce a purified crude gas stream containing trichlorosilane and silicon tetrachloride and a homogeneous liquid phase consisting essentially of $SiCl_4$, this liquid phase then being removed from the circuit,

    c) condensing and subsequently separating the purified crude gas stream by distillation to form a partial stream consisting essentially of $SiCl_4$ and a partial stream consisting essentially of $SiHCl_3$,

    d) returning the partial stream consisting essentially of $SiCl_4$ to the reaction of metallurgical silicon with $SiCl_4$ and $H_2$,

    e) disproportionating the partial stream containing $SiHCl_3$ to form $SiCl_4$ and $SiH_4$, and

    f) returning the $SiCl_4$ formed in the reaction to the reaction of metallurgical silicon with $SiCl_4$ and $H_2$, **characterized in that** the crude gas stream containing trichlorosilane and silicon tetrachloride is liberated from solids as far as possible by gas filtration before being washed with the condensed chlorosilanes,
    the washing process with the condensed chlorosilanes is carried out at a pressure of 25 to 40 bar and at a temperature of at least 150°C in a multi-stage distillation column and is carried out in such a way that 0.1 to 3 weight percent of the crude gas stream containing trichlorosilane and silicon tetrachloride is recovered in the form of a condensed liquid phase consisting essentially of $SiCl_4$,
    such condensed liquid phase consisting essentially of $SiCl_4$ is removed from the $SiCl_4$ circuit and expanded to a pressure of 1 bar outside said $SiCl_4$ circuit and cooled to a temperature of 10 to 40°C, whereby dissolved impurities separate out, and such impurities separating out are removed by filtration.

2. A method according to Claim 1, **characterized in that** the gas filtration is carried out in several cyclones which are connected in series or in one multi-cyclone.

3. A method according to at least one of Claims 1 to 2, **characterized in that** the impurities separating out are removed from the liquid phase consisting essentially of $SiCl_4$ by filtration by means of plate pressure filters provided with sintered wire-cloth as filter element.

4. A method according to Claim 3, **characterized in that** the filtrate consisting essentially of $SiCl_4$ is used as raw material for the manufacture of pyrogenic silicic acid.

5. A method according to at least one of Claims 1 to 4, **characterized in that** 0.05 to 10 weight percent hydrogen chloride (HCl), based on the amount of $SiCl_4$, is used as an additional reactant in reacting metallurgical silicon with $SiCl_4$ and $H_2$.

6. A method according to at least one of Claims 1 to 5, **characterized in that** 0.5 to 3 weight percent HCl, based on the amount of $SiCl_4$ introduced, is used as an additional reactant in reacting metallurgical silicon with $SiCl_4$ and $H_2$.

7. A method according to at least one of Claims 1 to 6, **characterized in that** the hydrogen chloride to be added is used in an anhydrous form as hydrogen chloride gas.

8. A method according to at least one of Claims 1 to 7, **characterized in that** the reaction of metallurgical silicon with $SiCl_4$ and $H_2$ is carried out in the presence of a catalyst.

9. A method according to Claim 8, **characterized in that** the catalysts used are copper, iron, copper compounds, iron compounds or any mixtures thereof.

10. A method according to at least one of Claims 1 to 9, **characterized in that** the reaction of metallurgical silicon with $SiCl_4$ and $H_2$ is carried out at temperatures from 500 to 800°C and a pressure from 25 to 40 bar.

**Revendications**

1.  Procédé de production de silane ($SiH_4$) par :

    a) la transformation de silicium métallurgique avec du tétrachlorure de silicium ($SiCl_4$) et de l'hydrogène ($H_2$) en un flux de gaz brut contenant du trichlorosilane ($SiHCl_3$) et du tétrachlorure de silicium ($SiCl_4$),
    b) élimination des impuretés du flux de gaz brut obtenu par lavages avec des chlorosilanes condensés, le processus permettant d'évacuer un flux de gaz brut purifié contenant du trichlorosilane et du tétrachlorure de silicium et une phase liquide homogène constituée essentiellement de $SiCl_4$.
    c) condensation et séparation consécutive par distillation du flux de gaz brut purifié dans un flux partiel constitué essentiellement de $SiCl_4$ et essentiellement de $SiHCl_3$,
    d) retour du flux partiel constitué essentiellement de $SiCl_4$ à la transformation du silicium métallurgique avec le $SiCl_4$ et l'$H_2$.
    e) disproportionation du flux partiel contenant du $SiHCl_3$ en $SiCl_4$ et $SiH_4$ et
    f) retour du $SiCl_4$ formé lors de la disproportionation dans la transformation de silicium métallurgique avec du $SiCl_4$ et du $H_2$, **caractérisé en ce que** le flux de gaz brut contenant du trichlorosilane et du tétrachlorure de silicium est largement libéré des substances solides par filtration de gaz avant le lavage avec les chlorosilanes condensés, le lavage avec les chlorosilanes condensés étant effectué à une pression de 25 à 40 bar et à une température d'au moins 150° C dans une colonne de distillation en plusieurs étapes et étant effectué de telle sorte que 0,1 à 3 % en poids du flux de gaz brut contenant du trichlorosilane et du tétrachlorure de silicium est obtenu sous forme de phase liquide condensée constituée essentiellement de $SiCl_4$, cette phase liquide constituée essentiellement de $SiCl_4$ étant prélevée du cycle de $SiCl_4$ et étant ensuite détendue du cycle de $SiCl^4$ à une pression de 1 bar et refroidie à une température comprise entre 10 et 40° C, ce faisant, les impuretés libérées étant décantées et les puretés décantées étant séparées par filtration.

2.  Procédé selon la revendication 1, **caractérisé en ce que** la filtration du gaz est réalisée avec plusieurs séparateurs à cyclone commutés les uns après les autres ou avec un multicyclone.

3.  Procédé selon au moins l'une quelconque des revendications 1 à 2, **caractérisé en ce que** la séparation des impuretés décantées de la phase liquide constituée essentiellement de $SiCl_4$ s'effectue par filtration sur un filtre à disque sous pression doté d'une toile métallique frittée, comme moyen de filtrage.

4.  Procédé selon la revendication 3, **caractérisé en ce que** le filtrat constitué essentiellement de $SiCl_4$ est utilisé comme matière première dans la production d'acide silique pyrogène.

5.  Procédé selon au moins l'une quelconque des revendications 1 à 4, **caractérisé en ce que** le chlorure d'hydrogène (HCl) est utilisé en une quantité de 0,05 à 10 % en poids par rapport à la masse de $SiCl_4$ ajouté, comme réactif supplémentaire lors de la transformation du silicium métallurgique avec le $SiCl_4$ et l'$H_2$.

6.  Procédé selon au moins l'une quelconque des revendications 1 à 5, **caractérisé en ce que** le HCl est utilisé en une quantité de 0,5 à 3 % en poids par rapport à la masse du $SiCl_4$ ajouté, comme réactif supplémentaire lors de la transformation du silicium métallurgique avec le $SiCl_4$ et l'$H_2$.

7.  Procédé selon au moins l'une quelconque des revendications 1 à 6, **caractérisé en ce que** le chlorure d'hydrogène ajouté sous forme anhydre est utilisé comme gaz chlorhydrique.

8.  Procédé selon au moins l'une quelconque des revendications 1 à 7, **caractérisé en ce que** la réaction du silicium métallurgique avec le $SiCl_4$ et l'$H_2$ est effectuée en présence d'un catalyseur.

9.  Procédé selon la revendication 8, **caractérisé en ce que** du cuivre, du fer, des composés de cuivre, des composés de fer ou leurs mélanges sont utilisés comme catalyseur.

10. Procédé selon au moins l'une quelconque des revendications 1 à 9, **caractérisé en ce que** la réaction du silicium métallurgique avec le $SiCl_4$ et l'$H_2$ s'effectue à une température comprise entre 500 et 800° C et sous une pression de 25 à 40 bar.

Figur 1